# EUROPÄISCHE PATENTSCHRIFT

(11) **EP 0 546 526 B1**
(45) Veröffentlichungstag und Bekanntmachung des Hinweises auf die Patenterteilung: **17.05.1995**
(21) Anmeldenummer: 92120999.5
(22) Anmeldetag: 09.12.1992
(51) Int. Cl.: C03B 7/10

(54) **Verfahren zur Herstellung von Glastropfen mit Hilfe von Scherenmessern**
Method for producing glass-gobs by means of scissors
Procédé de fabrication de paraisons en verre au moyen de ciseaux

(30) Priorität: 10.12.1991 DE 4140690
(43) Veröffentlichungstag der Anmeldung: 16.06.1993
(73) Patentinhaber: Linde Aktiengesellschaft, 65189 Wiesbaden (DE)
(72) Erfinder: Rebhan, Dieter, Dipl.-Ing., W-8192 Geretsried-Gelting (DE)
(74) Vertreter: Schaefer, Gerhard, Dr.

(56) Entgegenhaltungen:
- WO-A-90/03341
- WO-A-92/16464

## Beschreibung

Die Erfindung betrifft ein Verfahren zur Herstellung von Glastropfen aus einer geschmolzenen Glasmasse mit Hilfe von Scherenmessern.

Bei der Glasherstellung tritt die in einem Ofen geschmolzene heiße Glasmasse aus einem Speiser aus und der Glasstrang wird von Scherenmessern in portionierte Stücke, sogenannte Glastropfen geschnitten. Diese Glastropfen werden im weiteren Herstellungsprozeß beispielsweise zu Glasflaschen verarbeitet. Die Scherenmesser werden bisher mit einer Suspension aus Wasser und Öl oder mit einer kalten Flüssigkeit und einem Schmiermittel abgekühlt und gleichzeitig geschmiert (siehe z.B. WO-A-90 03341). Die Glasmasse weist dabei Temperaturen von über 1200°C auf, die Scherenmesser sollen hingegen eine Temperatur von etwa 400°C nicht überschreiten. Aufgrund der hohen thermischen Belastung sowie der Reibung der Scheren aneinander und an der Glasmasse sind die dünnen Schneiden der Scherenmesser hoher Abnutzung ausgesetzt.

Nachteilig wirkt sich bei den bekannten Verfahren das sogenannte Leidenfrost-Phänomen auf die Effektivität der Kühlung und Schmierung der metallischen Flächen aus.

Das im Vergleich zu den aufgeheizten metallischen Flächen sehr viel kältere flüssige Kältemittel verdampft sofort beim Kontakt mit der heißen Fläche und bildet in dieser Grenzschicht eine die Wärmeübertragung stark beeinträchtigende Dampfschicht. Das flüssige Kälte- und Schmiermittel kann folglich der heißen Oberfläche nicht mehr genügend Wärme entziehen. Außerdem ist der direkte Kontakt zur heißen Oberfläche unterbrochen, so daß auch die Schmierung deutlich verschlechtert wird.

Durch diese Effekte werden die Lebenszeiten der Scherenmesser in der Glasindustrie erheblich herabgesetzt.

Um diese Nachteile zu umgehen wird das flüssige Kälte- und Schmiermittel mit hohem Druck und in großer Menge auf die abzukühlenden Flächen aufgebracht. Dies wiederum hat naturgemäß einen hohen Verbrauch und damit höhere Kosten sowie eine starke Verschmutzung und Belastung der Umgebung mit den Rückständen dieser Kälte- und Schmiermittel zur Folge. Darüberhinaus besteht bei der Verwendung flüssiger Kältemittel die Gefahr, daß Spritzer dieser kalten Flüssigkeit in direktem Kontakt zu der Glasmasse oder den Glasformen geraten, und daß durch diese Kontaktstellen lokale Fehler im späteren Glasprodukt verursacht werden.

Aufgabe der vorliegenden Erfindung ist es folglich, ein verbessertes Verfahren zur Herstellung von Glastropfen aus einer geschmolzenen Glasmasse mit Hilfe von Scherenmessern zu entwickeln, das die obengenannten Nachteile vermeidet, wobei insbesondere die Scherenmesser ohne Beeinflussung des nachfolgenden Verarbeitungsprozeßes gekühlt werden sollen.

Diese Aufgabe wird erfindungsgemäß dadurch gelöst, daß die Scherenmesser mit einem kalten inerten Gas beaufschlagt werden und anschließend Glastropfen von der aus einem Speiser austretenden Glasmasse mittels der gekühlten Scherenmesser abgeschnitten werden.

Das erfindungsgemäße Verfahren stellt eine hervorragende Kühlung der heißen Scherenmesser sicher, wodurch wiederum die Glastropfen sauber und genau portioniert von dem aus dem Speiser austretenden Strang der geschmolzenen Glasmasse abgeschnitten werden können.

Das kalte inerte Gas bietet zur Kühlung der Scherenmesser mehrere Vorteile: zum einen wirkt ein solches Gas aufgrund seiner inerten Eigenschaften weder umweltschädigend noch birgt der Umgang mit dem Gas größere Gefahren. Inerte Gase wie Stickstoff oder Kohlendioxid sind kostengünstig in großen Mengen erhältlich. Solche Gase können zudem tiefkalt verflüssigt geliefert werden, so daß durch Einsatz von Verdampfern oder Wärmetauschern ein kaltes Gas der gewünschten Temperatur bereitgestellt werden kann. Zum anderen wird der eingangs genannte Leidenfrost-Effekt bei dieser Art der Kühlung umgangen. Somit entsteht beim erfindungsgemäßen Verfahren nicht mehr wie bisher eine sich aufheizende, isolierende Dampfschicht zwischen den Scherenmessern und dem flüssigen Kühlmittel, vielmehr kann bei der Beaufschlagung mit dem kalten Gas erwärmtes Gas durch nachströmendes kaltes ersetzt werden.

Schließlich kann das inerte Gas nach seiner Verwendung aus dem Bereich der Scherenmesser abgesaugt werden. Somit besteht keine Gefahr, daß das Kaltemittel die nachfolgenden Glasverarbeitungsprozeße negativ beeinflußt, insbesondere in direkten Kontakt zu den Glastropfen oder zu den Formen kommt, mit denen die Glastropfen zum Endprodukt geformt werden.

Von Vorteil ist es dabei, wenn das kalte inerte Gas in Form eines Strahles auf die Außenseiten der Scherenmesser aufgebracht wird.

Der Strahl kann dann zusätzlich den Gasstrom so auf die Scherenmesser richten, daß die Gefahr eines direkten Kontaktes des kalten Gases mit den zugeschnittenen Glastropfen weiter herabgesetzt wird.

Weiterhin kann auch das kalte inerte Gas in das Innere der Scherenmesser durchsetzende Kanäle eingeleitet werden. Dazu muß das Innere der Scherenmesser mit einem System von untereinander verbundenen schmalen Kanälen durchsetzt sein. Dieses Kanalsystem wird im allgemeinen nicht bis in den vordersten Bereich der Schnittkanten der Scherenmesser vordringen, da die Scherenmesser hier eine sehr geringe Dicke aufweisen. Diese Verfahrensvariante ist insbesondere dann sinnvoll, wenn jeglicher Kontakt des Kühlmittels mit der Glasmasse vermieden werden soll, oder wenn kein Kühlmittel in die Umgebung des Glasherstellungsprozeßes gelangen soll.

Weiterhin kann es von Vorteil sein, wenn das kalte inerte Gas mit Luft vermischt wird. Durch diese Luftbeimischung kann die Temperatur des Gemisches leicht eingestellt werden, ohne daß Wärmetauscher benötigt werden. Dabei ist darauf zu achten, daß trockene Luft verwendet wird, wenn der Gefrierpunkt des Wasserdampfes unterschritten wird.

Sinnvoll kann auch der Zusatz einer schmierenden Substanz zu dem kalten inerten Gas sein. Dadurch wird die Reibung der Scherenmesser aneinander und an der Glasmasse herabgesetzt. Die schmierende Substanz, beispielsweise Schmieröl, kann außerdem mit dem Strahl des kalten inerten Gases verdüst

Vorteilhaft für das erfindungsgemäße Verfahren ist es, wenn das kalte inerte Gas bzw. das dieses enthaltende Gemisch bei einer Temperatur von -196°C bis 0°C, vorzugsweise von -100°C bis -50°C, verwendet wird. Das kalte inerte Gas bzw. das kalte Gemisch kann durch einen automatischen Mechanismus periodisch jeweils vor dem Abschneiden der Glastropfen auf die Außenseiten bzw. in das Innere der Scherenmesser gebracht werden. Bei den obengenannten Temperaturen können dann die Scherenmesser während des gesamten Glasherstellungsprozesses auf Temperaturen von etwa 400°C gehalten werden.

Im folgenden soll ein Ausführungsbeispiel das erfindungsgemäße Verfahren näher erläutern.

Bei der Glasflaschenherstellung werden Scherenmesser zum Abschneiden einzelner Glastropfen bestimmter Größe von einem aus einem Speiser austretenden Strang aus erhitztem zähflüssigem Glas verwendet. Diese Glastropfen werden mit den bekannten Preß-Blas- oder Blas-Blas-Verfahren zum Endprodukt geformt.

Bisher wird beispielsweise Öl als Schmiermittel und ein flüssiges Kältemittel (meist Wasser) auf die Scherenmesser aufgebracht, um die Belastung durch Wärme und Reibung zu mindern. Der Leidenfrost-Effekt bewirkt hierbei jedoch ein schlagartiges Verdampfen des flüssigen Kältemittels mit der Folge, daß die Flüssigkeit durch das entstandene Dampfpolster von der heißen Fläche der Scherenmesser abgetrennt wird und in die Umgebung spritzt. Anlagenverschmutzung und Spritzer auf die Glasmasse, die zu Formfehlern bei den fertiggestellten Glasflaschen führen können, sind die weiteren Folgen.

Erfindungsgemäß wird trockene Luft in einer Düse mit flüssigem Stickstoff, der in einem Tank bereitgestellt wird, gemischt.

Bei dieser Mischung verdampft der Stickstoff. Die Temperatur dieses Gasgemisches wird durch die Menge an zugeführter Luft geregelt. Diesem Gasstrom wird in einer weiteren Düse Öl zugeführt und anschließend wird dieses kalte Gemisch in Form eines Strahls auf die Scherenmesser gerichtet.

Zweckmäßig ist dabei, wenn jeweils ein Strahl auf ein Scherenmesserblatt gerichtet wird. Die Austrittsdüsen für das kalte Stickstoff-Luft-Öl-Gemisch sind in der Nähe des Tropfenspeisers angebracht und ein wenig von ihm weg und auf die Scherenmesserblätter gerichtet. Immer wenn die Scherenmesser sich öffnen, werden sie von dem Strahl mit dem kalten Gemisch getroffen und von dem kalten Gas-Öl-Gemisch eingehüllt. Die Scherenmesser kühlen dabei schnell ab und werden gleichzeitig geschmiert.

Die Temperatur des kalten Gas-Öl-Gemischs wird bei diesem Ausführungsbeispiel mittels der dem Stickstoff zugeführten Luft eingestellt und derart geregelt, daß die Scherenmesser eine Maximaltemperatur von 400°C nicht überschreiten.

Die Zufuhr des kalten Gas-Öl-Gemisches kann intermittierend erfolgen, indem die Austrittsdüse in kurzen Zeitabständen (Periode meist kleiner als 1 Sekunde) geschlossen und geöffnet wird. Bei sehr geringer Periodendauer ist das Resultat des intermittierenden Betriebs jedoch nicht wesentlich von dem des kontinuierlichen verschieden.

Die Glastropfen werden mit dem erfindungsgemäßen Verfahren sauber abgeschnitten und die Tropfengröße unterliegt sehr geringen Schwankungen. Die Abnutzung der Scherenmesser kann deutlich vermindert werden.

## Patentansprüche

1. Verfahren zur Herstellung von Glastropfen aus einer geschmolzenen Glasmasse mit Hilfe von Scherenmessern, wobei die Scherenmesser mit einem kalten inerten Gas beaufschlagt werden und anschließend Glastropfen von der aus einem Speiser austretenden Glasmasse mittels der gekühlten Scherenmesser abgeschnitten werden.

2. Verfahren nach Anspruch 1, dadurch gekennzeichnet, daß das kalte inerte Gas in Form eines Strahles auf die Außenseiten der Scherenmesser aufgebracht wird.

3. Verfahren nach einem der Ansprüche 1 oder 2, dadurch gekennzeichnet, daß das kalte inerte Gas in das Innere der Scherenmesser durchsetzende Kanäle eingeleitet wird.

4. Verfahren nach einem der Ansprüche 1 bis 3, dadurch gekennzeichnet, daß das kalte inerte Gas mit Luft vermischt wird.

5. Verfahren nach einem der Ansprüche 1 bis 2 oder 4, dadurch gekennzeichnet, daß dem kalten inerten Gas eine schmierende Substanz zugesetzt wird.

6. Verfahren nach einem der Ansprüche 1 bis 5, dadurch gekennzeichnet, daß das kalte inerte Gas bzw. das dieses enthaltende Gemisch bei einer Temperatur von -196°C bis 0°C, vorzugsweise von -100°C bis -50°C, verwendet wird.

## Claims

1. Method for production of drops of glass from a molten mass of glass with the aid of shears, in which the shears are exposed to a cold inert gas and then drops of glass are cut from the mass of glass emerging from a feeder by means of the cooled shears.

2. Method according to claim 1, characterised in that the cold inert gas is applied to the outsides of the shears in the form of a jet.

3. Method according to one of claims 1 or 2, characterised in that the cold inert gas is introduced into the interior of channels running through the shears.

4. Method according to one of claims 1 to 3, characterised in that the cold inert gas is mixed with air.

5. Method according to one of claims 1 to 2 or 4, characterised in that a lubricating substance is added to the cold inert gas.

6. Method according to one of claims 1 to 5, characterised in that the cold inert gas or the mixture containing the latter is used at a temperature of -196°C to 0°C, preferably -100°C to -50°C.

## Revendications

1. Procédé de fabrication de gouttes de verre à partir d'une masse de verre fondu, à l'aide de lames de cisaille, dans lequel les lames de cisaille sont actionnées à l'aide d'un gaz inerte froid et on forme alors les gouttes de verre en les séparant par découpage, à l'aide des lames de cisaille refroidies, de la masse de verre s'échappant d'un organe d'accumulation.

2. Procédé selon la revendication 1, caractérisé en ce que le gaz inerte froid est amené sous forme d'un jet dirigé sur les faces extérieures des lames de cisailles.

3. Procédé selon l'une des revendications 1 ou 2, caractérisé en ce qu'on amène le gaz inerte froid à l'intérieur de canaux traversant les lames de cisaille.

4. Procédé selon l'une des revendications 1 à 3, caractérisé en ce qu'on mélange le gaz inerte froid à de l'air.

5. Procédé selon l'une des revendications 1 à 2 ou 4, caractérisé en ce qu'on ajoute au gaz inerte froid une substance lubrifiante.

6. Procédé selon l'une des revendications 1 à 5, caractérisé en ce qu'on utilise le gaz inerte froid ou le mélange contenant ce gaz à une température comprise entre -196°C et 0°C, de préférence entre -100°C et -50°C.
